(19) Europäisches Patentamt

European Patent Office

Office européen des brevets

(11) **EP 0 911 660 A1**

(12) **DEMANDE DE BREVET EUROPEEN**

(43) Date de publication:
28.04.1999 Bulletin 1999/17

(51) Int Cl.⁶: **G02B 6/34**

(21) Numéro de dépôt: 98402642.7

(22) Date de dépôt: 23.10.1998

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **27.10.1997 FR 9713440**

(71) Demandeur: **COMMISSARIAT A L'ENERGIE ATOMIQUE**
**75015 Paris Cédex 15 (FR)**

(72) Inventeurs:
• **Grand, Gilles**
**38000 Grenoble (FR)**
• **Delisle, Vincent**
**Ontario, Ottawa K2C 3L5 (CA)**
• **Pouteau, Patrick**
**Le Chevallon de Voreppe, 38340 Voreppe (FR)**

(74) Mandataire: **Signore, Robert**
**c/o BREVATOME**
**25, rue de Ponthieu**
**75008 Paris (FR)**

(54) **Dispositif optique à réseau de phase et procédé de fabrication de celui-ci**

(57) Dispositif à réseau de phase ou PHASAR et procédé de fabrication de celui-ci.

Ce dispositif comprend une zone planaire d'entrée (4), une zone planaire de sortie (6), un réseau de microguides (2) disposé entre ces zones, des moyens (8) d'introduction d'onde lumineuse associés à la zone d'entrée et des moyens (10) de sortie d'onde lumineuse associés à la zone de sortie. Selon l'invention on forme au moins deux morceaux (12, 16, 22), l'un comprenant une partie d'au moins l'une des zones ainsi que les moyens associés correspondants, l'autre comprenant l'autre partie de cette zone et le reste du dispositif et les morceaux sont rapportés de façon à former l'ensemble du dispositif et à ajuster ce dispositif en longueur d'onde. Application aux télécommunications optiques et à la spectrométrie optique.

FIG. 2

## Description

### DOMAINE TECHNIQUE

La présente invention concerne un dispositif à réseau de phase ("phased array device") ou PHASAR ainsi qu'un procédé de fabrication de ce dispositif.

Un tel dispositif, également appelé AWG (pour Arrayed-Waveguide Grating »), s'applique notamment

- au domaine des télécommunications par fibres optiques, qui utilisent le multiplexage et le démultiplexage en longueur d'onde, et
- au domaine de la spectrométrie optique.

Le dispositif objet de l'invention sera appelé PHASAR dans la suite de la description.

### ÉTAT DE LA TECHNIQUE ANTÉRIEURE

Un PHASAR est un dispositif optique intégré fondé sur un réseau (« grating ») dispersif d'un type particulier.

En effet il comprend un réseau (« array ») de microguides optiques permettant de créer un déphasage périodique.

A ce sujet on consultera les documents (1), (2) et (12) qui, comme les autres documents cités par la suite, sont mentionnés à la fin de la présente description.

Un tel réseau dispersif ne fait pas appel à une technique de réalisation de facettes comme c'est le cas dans les réseaux de diffraction de l'optique classique et dans des dispositifs optiques intégrés formant des réseaux de diffraction gravés.

A ce sujet on se reportera au document (3).

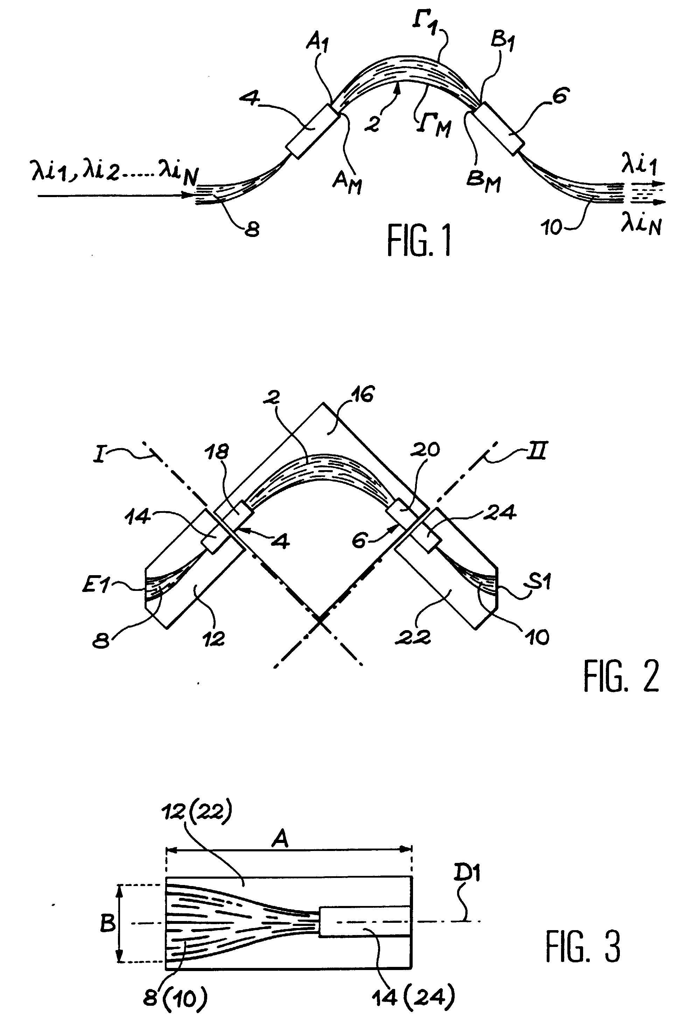

La figure 1 est une vue schématique d'un PHASAR connu ayant la forme classique d'un double S.

Le PHASAR de la figure 1 comprend un réseau (« array ») central de guides de lumière ou microguides 2 et deux zones planaires 4 et 6.

Un côté de la zone planaire 4 est optiquement couplé à un côté du réseau de microguides 2.

De même, un côté de la zone planaire 6 est optiquement couplé à l'autre côté du réseau de microguide 2.

Dans l'exemple représenté, l'autre côté de la zone 4 est optiquement couplé à des moyens d'introduction d'onde lumineuse constitués par un ensemble guides de lumière ou microguides 8.

De même, l'autre côté de la zone 6 est optiquement couplé à des moyens de sortie d'onde lumineuse constitués par un ensemble guides de lumière ou microguides 10.

Ainsi, les microguides 8 constituent les microguides d'entrée du PHASAR de la figure 1 et les microguides 10 constituent les microguides de sortie de ce PHASAR.

Il pourrait y avoir un seul microguide à l'entrée et plusieurs microguides à la sortie (pour un démultiplexage en longueur d'onde par exemple) ou plusieurs microguides à l'entrée et un seul microguide à la sortie (dans le cas d'un multiplexage en longueur d'onde par exemple).

Il pourrait aussi y avoir d'autres composants optiques que des microguides à l'entrée et/ou à la sortie du PHASAR.

De plus, un PHASAR peut être connecté à des fibres optiques en entrée et/ou en sortie.

Il peut aussi être intégré monolithiquement à des sources lumineuses en entrée et éventuellement connecté à des fibres optiques en sortie.

Un PHASAR peut aussi être intégré monolithiquement à des photodétecteurs en sortie et éventuellement connecté à des fibres optiques en entrée.

La figure 1 illustre le cas d'un démultiplexage pour un PHASAR à E entrées et N sorties.

Une onde lumineuse polychromatique, dont les longueurs d'onde sont notées $\lambda i1$, $\lambda i2$ ... $\lambda iN$, est injectée dans l'un i des canaux d'entrée 8, i allant de 1 à E, les canaux étant des microguides dans cet exemple.

Le PHASAR est prévu pour fournir en sortie des lumières de longueurs d'onde respectives $\lambda i1$, $\lambda i2$ ... $\lambda iN$ sur les microguides de sortie 10 dont le nombre est égal à N.

Les zones planaires 4 et 6 sont des régions de propagation libre pour la lumière.

La zone planaire 4 permet à l'onde lumineuse polychromatique de s'étendre en largeur de manière à éclairer le réseau central de microguides 2 sur toute la largeur de celui-ci.

Le long de la zone planaire 6, qui se trouve à la sortie du réseau de microguides 2, se produit un effet combiné d'interférences et de focalisation qui permet de séparer les longueurs d'onde $\lambda i1$, $\lambda i2$ ... $\lambda iN$ les unes des autres et d'obtenir, à la sortie de N microguides 10, des lumières de longueurs d'onde respectives $\lambda i1$, $\lambda i2$ ... $\lambda iN$.

Le réseau central, associé à la zone 6, constitue donc l'élément disperseur du PHASAR.

D'une manière générale, la particularité d'un PHASAR réside dans le procédé de création du déphasage périodique nécessaire à la séparation des longueurs d'onde.

Ce déphasage est obtenu au moyen du réseau des microguides 2 dont le nombre est noté M.

Les chemins optiques correspondant à ces M microguides sont différents les uns des autres.

La différence D entre deux chemins optiques consécutifs, appelée différence de marche optique, est égale à une constante.

Cette différence de marche optique D satisfait aux égalités ci-dessous :

$$D = \int_{\Gamma_k} n_k ds_k - \int_{\Gamma_{k+1}} n_{k+1} ds_{k+1} = 2\pi p \lambda_m \qquad (1)$$

dans lesquelles

p représente l'ordre du réseau de diffraction que constitue le PHASAR
$\lambda_m$ représente la longueur d'onde moyenne du PHASAR encore appelée longueur d'onde centrale du PHASAR
k représente le numéro d'un microguide du réseau central du PHASAR, l'indice k variant de 1 à M
$n_k$ est l'indice effectif en un point d'abscisse curviligne $s_k$ du microguide numéro k
$s_k$ est l'abscisse curviligne le long du microguide numéro k.

La première intégrale curviligne est calculée le long du chemin $\Gamma_k$ allant du point d'entrée $A_k$ au point de sortie $B_k$ du microguide numéro k.

De même, la deuxième intégrale curviligne est calculée le long du chemin $\Gamma_{k+1}$ allant du point d'entrée $A_{k+1}$ au point de sortie $B_{k+1}$ du microguide numéro k+1.

A titre d'exemple, on a représenté sur la figure 1 le chemin $\Gamma_1$ allant du point $A_1$ au point $B_1$ du microguide numéro 1 et le chemin $\Gamma_M$ allant du point $A_M$ au point $B_M$ du microguide numéro M.

Précisons que le PHASAR de la figure 1, comme d'ailleurs ceux des autres figures peut, si besoin est, être utilisé en sens contraire, compte tenu du principe du retour inverse de la lumière.

Dans ce cas, l'entrée devient une sortie et la sortie une entrée.

Ainsi dans la présente description les mots « entrée » et « sortie » sont employés pour simplifier mais on devrait parler d'entrée/sortie.

Les avantages d'un PHASAR, par rapport aux dispositifs utilisant des réseaux de diffraction gravés que l'on réalise en utilisant les techniques de l'optique intégrée (voir le document (3)) sont nombreux.

Parmi les principaux avantages, on peut citer :

- la réalisation d'un PHASAR avec un seul niveau de masquage,
- la possibilité d'atteindre un faible niveau de pertes (2 à 3 dB) au lieu de 5 à 7 dB dans le cas des dispositifs utilisant des réseaux de diffraction gravés,
- la possibilité, pour un PHASAR, de fonctionner avec plusieurs entrées et plusieurs sorties,
- la possibilité, avec un PHASAR, d'accroître la densité spectrale (c'est-à-dire de diminuer la différence entre les longueurs d'onde dispersées dans le cas d'un démultiplexage) jusqu'à des valeurs de l'ordre 0,008 nm (10 GHz en fréquence) - voir le document (4)- grâce à l'utilisation d'un fonctionnement à des ordres p très élevés du réseau de diffraction (p étant typiquement égal à 100), sans introduction de pertes supplémentaires.

Les PHASARs connus présentent des inconvénients.

Tout d'abord, pour les applications à forte densité spectrale, il est absolument nécessaire d'ajuster un PHASAR en longueur d'onde par rapport aux sources lumineuses.

Ces dernières étant elles-mêmes parfaitement fixées en longueur d'onde, il s'agit de fixer très précisément la longueur d'onde centrale ou longueur d'onde moyenne $\lambda_m$ du PHASAR.

Dans le domaine de la spectrométrie le problème est le même.

Il faut mesurer les longueurs d'onde dispersées de manière absolue.

L'erreur sur la longueur d'onde est liée à l'erreur sur la différence de marche optique D.

De manière approximative, trois causes d'incertitude s'ajoutent :

- la différence entre l'indice recherché et l'indice obtenu
- un gradient de l'indice moyen sur la largeur du réseau central de microguides
- une erreur systématique sur la longueur.

Considérons un exemple qui a fait l'objet d'une réalisation expérimentale (voir le document (12)).

Dans cet exemple, l'écart entre les longueurs d'onde multiplexées/démultiplexées $\Delta\lambda$ vaut 1,6 nm, le pas (p) du réseau de diffraction du PHASAR considéré vaut 60 et la longueur d'onde centrale recherchée vaut 1,55 $\mu$m.

Un calcul d'incertitude réalisé à partir de données approchées sur les trois causes d'erreur précitées et à partir des égalités (1) conduit à une incertitude relative sur la différence de marche optique :

$\Delta D/D$ peu différent de 1,6 x $10^{-3}$.

On obtient donc une incertitude $\Delta\lambda_m$ sur la longueur d'onde centrale $\lambda_m$ du PHASAR peu différente de 2,4 nm.

En conséquence, l'incertitude sur $\lambda_m$ peut être supérieure à l'écart spectral $\Delta\lambda$ entre les longueurs d'onde multiplexées/démultiplexées.

Ceci empêche pratiquement de travailler avec des sources lumineuses de longueurs d'onde fixes dans le domaine du multiplexage/démultiplexage (pour les télécommunications optiques) et de mesurer des longueurs d'onde absolues dans le domaine de la spectrométrie.

Cette erreur sur $\lambda_m$ a été confirmée par des expériences des auteurs de la présente invention.

Plusieurs moyens sont déjà connus pour effectuer un ajustement en longueur d'onde (c'est-à-dire pour ajuster et fixer $\lambda_m$).

Dans tous les cas il s'agit de compenser l'erreur sur $\lambda_m$ par différentes techniques.

Une première technique connue est un ajustement par effet thermo-optique.

Il est toujours possible d'accorder la longueur d'onde moyenne par effet thermo-optique (variation du chemin optique en fonction de la température) en contrôlant la température de fonctionnement du PHASAR, la silice ayant un coefficient d'expansion thermique non négligeable.

A ce sujet on consultera le document (6).

L'inconvénient de cette technique réside dans l'insuffisance de latitude de compensation (un dixième de l'écart spectral $\Delta\lambda$ environ).

Une deuxième technique connue est un ajustement par modification des entrées/sorties.

En effet il a été proposé de rajouter des canaux de manière appropriée à l'entrée et à la sortie du PHASAR pour ajuster la longueur d'onde moyenne en déplaçant celle-ci par pas de $\Delta\lambda/10$ de manière analogue à un système de vernier optique.

A ce sujet on consultera le document (7).

L'inconvénient majeur de cette deuxième technique connue réside dans la lourdeur du procédé employé car il faut chercher quels sont les bons canaux d'entrée/sortie avant de figer ceux-ci.

Une troisième technique connue consiste à utiliser un ajustement par ablation laser d'une couche déphasante rajoutée sur le circuit.

Dans le cas d'un écart spectral vraiment faible (10 GHz), une autre solution « statique » consiste à disposer sur chaque microguide central une couche de silicium amorphe elle-même ajustée par ablation laser.

A ce sujet on consultera le document (5).

Cette troisième technique connue, bien que très intéressante car elle permet également d'obtenir de meilleures performances intrinsèques, est extrêmement lourde car elle nécessite à la fois un surcroît de technique et une mesure élaborée de la phase à la sortie de chaque microguide.

Les PHASARs connus présentent un deuxième inconvénient : ils occupent nécessairement une grande surface.

Typiquement le PHASAR mentionné plus haut (1,6 nm d'écart spectral, 16x16 voies) est réalisable sur une surface rectangulaire de 1,7 cm x 4,2 cm, ce qui donne la possibilité d'en réaliser 7 sur une plaque dont le diamètre est égal à 100 cm.

Les raisons de ces dimensions sont liées :

- au fonctionnement même du PHASAR qui impose une grande différence de longueur entre les microguides du réseau central (typiquement plusieurs millimètres entre les microguides extrêmes)
- à la conception « monobloc » du PHASAR.

En effet, si l'on veut former, sur un seul élément, un PHASAR dont l'entrée et la sortie se font suivant la même direction et dont les microguides du réseau central présentent de grandes différences de longueur, on aboutit nécessairement à une forme classique en double S qui est visible sur la figure 1 et qui nécessite une grande surface.

Pour remédier à cet inconvénient, diverses techniques de repliement sont connues.

A ce sujet on consultera les documents (8) et (9).

L'inconvénient de ces techniques résulte :

- de la nécessité de prévoir un miroir supplémentaire par découpe et clivage, ce qui complique la technique de fabrication, et

- du caractère figé des PHASARs obtenus qui, associé à l'imprécision de la découpe, pose nécessairement des problèmes supplémentaires pour l'ajustement en longueur d'onde.

**EXPOSÉ DE L'INVENTION**

La présente invention a pour but de remédier aux inconvénients précédents.

Elle a tout d'abord pour objet un dispositif à réseau de phase ou PHASAR comprenant les composants suivants :

- une zone planaire d'entrée,
- une zone planaire de sortie,
- un réseau de microguides disposé entre ces zones,
- des moyens d'introduction d'onde lumineuse associés à la zone planaire d'entrée, et
- des moyens de sortie d'onde lumineuse associés à la zone planaire de sortie,

ce dispositif étant caractérisé en ce qu'il comprend au moins deux morceaux appelés premier et deuxième morceaux, le premier morceau comprenant une partie d'au moins l'une des zones planaires ainsi que les moyens associés correspondants, le deuxième morceau comprenant l'autre partie de cette zone planaire et le reste des composants du dispositif, et en ce que les premier et deuxième morceaux sont rapportés de façon à former l'ensemble du dispositif et à ajuster ce dispositif en longueur d'onde.

Selon un premier mode de réalisation particulier du dispositif objet de l'invention, le premier morceau comprend une partie d'une seule des deux zones planaires et le deuxième morceau comprend l'autre partie de cette zone planaire et la totalité de l'autre zone planaire.

Selon un deuxième mode de réalisation particulier, le premier morceau comprend une partie de chacune des première et deuxième zones planaires et le deuxième morceau comprend les autres parties respectives des première et deuxième zones planaires.

Selon un mode de réalisation particulier, ces autres parties respectives sont situées d'un même côté du deuxième morceau.

Selon un troisième mode de réalisation particulier, le dispositif comprend trois morceaux appelés premier, deuxième et troisième morceaux, le premier morceau comprenant une partie de l'une des zones planaires ainsi que les moyens associés correspondants, le deuxième morceau comprenant une partie de l'autre zone planaire ainsi que les moyens associés correspondants et le troisième morceau comprenant les autres parties respectives des zones planaires ainsi que le réseau de microguides, et en ce que les premier, deuxième et troisième morceaux sont rapportés de façon à former l'ensemble du dispositif et à ajuster ce dispositif en longueur d'onde.

Dans ce cas, les autres parties respectives des zones planaires peuvent être situées d'un même côté du troisième morceau.

De préférence, les moyens d'introduction d'onde lumineuse et les moyens de sortie d'onde lumineuse s'étendent de façon sensiblement rectiligne à partir de leurs zones planaires respectives.

Selon un mode de réalisation préféré du dispositif objet de l'invention, ce dispositif comprend en outre un support sur lequel les morceaux sont rapportés.

Les morceaux peuvent être rapportés de façon inamovible sur ce support.

En variante, au moins un morceau comprenant une partie de zone planaire ainsi que les moyens associés correspondants peut être rapporté de façon amovible sur le support.

La présente invention concerne aussi un procédé de fabrication du dispositif objet de l'invention, ce procédé étant caractérisé en ce qu'on forme les morceaux, on rapporte ces morceaux de façon à former l'ensemble du dispositif et on ajuste ce dispositif en longueur d'onde.

Selon un mode de mis en oeuvre particulier du procédé objet de l'invention, on effectue un déplacement relatif d'un morceau par rapport à l'autre pour ajuster la longueur d'onde centrale du dispositif.

Les moyens d'introduction d'ondes lumineuses et les moyens de sortie d'ondes lumineuses peuvent être optiquement reliés à des fibres optiques et/ou à des émetteurs-récepteurs de lumière avant d'ajuster le dispositif en longueur d'onde.

Chaque morceau peut être formé sur un substrat susceptible d'être clivé puis être séparé de ce substrat par clivage.

En variante, chaque morceau peut être formé sur un substrat puis séparé de ce substrat par sciage.

En fonction de l'état de surface obtenu pour chaque bord de ce morceau, un polissage d'un ou plusieurs bords de ce morceau peut être nécessaire.

**BRÈVE DESCRIPTION DES DESSINS**

La présente invention sera mieux comprise à la lecture de la description d'exemples de réalisation donnés ci-après, à titre purement indicatif et nullement limitatif, en faisant référence aux dessins annexés sur lesquels :

- la figure 1 déjà décrite, est une vue de dessus schématique d'un PHASAR connu, ayant la forme d'un double S,
- la figure 2 est une vue de dessus schématique d'un mode de réalisation particulier d'un PHASAR conforme à l'invention,
- la figure 3 est une vue de dessus schématique d'une partie d'entrée ou de sortie d'un PHASAR conforme à l'invention, cette partie ayant sensiblement une forme linéaire,
- la figure 4 est une vue de dessus schématique d'un autre PHASAR conforme à l'invention,
- la figure 5 est une vue en coupe transversale schématique d'un PHASAR conforme à l'invention, dont les différents morceaux sont collés sur un support,
- la figure 6 est une vue de dessus schématique d'un autre PHASAR connu, ayant la forme d'un U,
- la figure 7 est une vue de dessus schématique d'un autre PHASAR conforme à l'invention,
- la figure 8 illustre schématiquement l'intérêt de faire une séparation à l'intérieur d'une zone planaire plutôt que devant celle-ci, et
- les figures 9 et 10 illustrent schématiquement des modes de réalisation particuliers de cette séparation.

**EXPOSÉ DÉTAILLÉ DE MODES DE RÉALISATION PARTICULIERS**

La figure 2 illustre schématiquement un PHASAR conforme à l'invention.
Ce PHASAR a les mêmes composants que celui de la figure 1 et on a conservé les références de ces composants dans le cas de la figure 2.
Cependant, le PHASAR de la figure 1 est en un seul morceau : tous ses composants sont formés sur un même substrat (non représenté).
Au contraire, le PHASAR de la figure 2 est en trois morceaux.
Le premier morceau 12 comprend :

- une partie 14 de la zone planaire d'entrée 4 et
- les microguides d'entrée 8 qui aboutissent à cette partie 14.

Le deuxième morceau 16 comprend :

- le réseau central de microguides 2,
- d'un côté de celui-ci, la partie 18 qui constitue le complément de la partie 14 de la zone planaire d'entrée et
- de l'autre côté de ce réseau central de microguides, une partie 20 de la zone planaire de sortie qui prolonge le réseau central de microguides 2.

Le troisième morceau 22 comprend :

- l'autre partie 24 de la zone planaire de sortie 6, qui constitue le complément de la partie 20, et
- les microguides de sortie 10 qui prolongent cette zone planaire de sortie 6.

Dans l'exemple représenté, la ligne I de séparation des parties 14 et 18 de la zone planaire d'entrée 4 passe approximativement par le milieu de cette zone planaire.
De même, la ligne II de séparation des parties 20 et 24 de la zone planaire de sortie 6 passe (dans cet exemple) approximativement par le milieu de cette zone planaire.
Cependant, dans certains cas, la ligne I ou la ligne II ou chacune de celles-ci peut avantageusement se situer très près des microguides 8 ou 10 asspciés. Ceci est également vrai pour les autres variantes de l'invention.
Les morceaux 12, 16 et 22 sont réalisés indépendamment les uns des autres.
On peut réaliser chacun des morceaux 12, 16 et 22, généralement en plusieurs exemplaires, sur un même substrat approprié puis découper ces morceaux et les assembler de façon à former le PHASAR de la figure 2.
On peut aussi fabriquer le morceau 12, généralement en plusieurs exemplaires, sur un substrat approprié et le morceau 16, généralement en plusieurs exemplaires, sur un substrat approprié différent du précédent et faire de même pour le morceau 22.
Dans ce cas, on découpe encore les morceaux pour former le PHASAR de la figure 2 (en plusieurs exemplaires).

On peut même fabriquer le PHASAR de la figure 2 d'un seul tenant sur un substrat, découper les trois morceaux à partir de ce substrat et les assembler pour former le PHASAR de la figure 2.

Dans l'exemple représenté, le morceau 16 a, en vue de dessus, la forme d'un carré dont deux côtés adjacents sont respectivement parallèles aux lignes I et II.

Le morceau 12 a sensiblement la forme d'un rectangle privé d'un coin triangulaire laissant apparaître un plan d'entrée E1 du PHASAR.

Les microguides d'entrée 8 arrivent perpendiculairement à ce plan d'entrée E1 comme on le voit sur la figure 2.

Le morceau 22 a également la forme d'un rectangle privé d'un coin triangulaire laissant apparaître un plan de sortie S1 du PHASAR de la figure 2.

Les microguides de sortie 10 arrivent également perpendiculairement à ce plan de sortie S1.

Comme on le verra mieux par la suite, les morceaux une fois obtenus sont assemblés, ajustés les uns par rapport aux autres puis rendus rigidement solidaires les uns des autres par exemple par collage.

Un tel procédé a trois avantages.

Le premier avantage est le suivant : si l'on effectue l'ajustement des morceaux les uns par rapport aux autres de façon dynamique c'est-à-dire en contrôlant la longueur d'onde de sortie du PHASAR, on ajuste ainsi la longueur d'onde centrale de celui-ci de façon opto-mécanique.

Cette méthode d'ajustement est déjà divulguée par le document (10) mais dans ce document (10) il est question de déplacer une seule fibre optique devant l'entrée du PHASAR.

Le procédé conforme à l'invention permet, quant à lui, de déplacer tous les microguides d'entrée et tous les microguides de sortie simultanément.

Le deuxième avantage est le suivant : si l'on fabrique les morceaux du PHASAR indépendamment les uns des autres (réalisations indépendantes d'un substrat contenant le réseau central de microguides et deux parties respectives des zones planaires, d'un substrat contenant une partie d'une zone planaire et les microguides correspondants et d'un substrat comprenant une partie de l'autre zone planaire et les microguides correspondants), on gagne un facteur trois sur la surface du PHASAR comme on le verra mieux par la suite.

De plus, si l'on abandonne la forme en double S du PHASAR les morceaux 12 et 22 peuvent être « linéarisés ».

Ceci est schématiquement illustré en vue de dessus sur la figure 3.

On voit sur cette figure 3 une partie 14 ou 24 de zone planaire prolongée par les microguides correspondants 8 ou 10 qui, dans le cas de la figure 3, ne sont plus courbés comme ils l'étaient dans le cas de la figure 2 mais s'étendent, comme la partie 14 ou 24, sensiblement suivant une direction rectiligne D1.

Le réseau central de microguides du morceau 16 conserve, quant à lui, sensiblement la forme d'un quart de cercle.

Le troisième avantage est le suivant : dans le cas de la connexion d'éléments optiques (fibres optiques, émetteurs, récepteurs ...) à l'entrée du PHASAR (c'est-à-dire aux microguides d'entrée du morceau 12) et à la sortie de ce PHASAR (c'est-à-dire aux microguides de sortie du morceau 22), le rendement de la fabrication complète qui inclut la connexion de ces fibres optiques est amélioré principalement du fait que les connexions sont, dans ce cas, réalisées indépendamment l'une de l'autre à l'entrée et à la sortie du PHASAR.

Deux avantages découlent de cela.

Le premier avantage est le suivant : une connexion « active » (c'est-à-dire nécessitant le contrôle du flux de lumière pendant l'opération) est simplifiée car aucun élément dispersif n'est inclus dans le dispositif.

Le deuxième avantage est le suivant : un ensemble (entrée ou sortie) de connexions non opérationnelles (c'est-à-dire une mauvaise récupération de la partie de la structure opérationnelle) n'élimine qu'une partie (microguides d'entrée ou de sortie) du dispositif au lieu d'éliminer le dispositif complet sur toute sa surface.

En ce qui concerne la découpe des morceaux, deux techniques sont utilisables pour cette découpe.

Si le ou les substrats sur lesquels on réalise les morceaux sont susceptibles d'être clivés, ce qui est le cas des substrats cristallins tels que les substrats en silicium, alors les morceaux peuvent être obtenus par clivage c'est-à-dire cassure le long de plans cristallographiques des substrats.

On peut aussi scier les morceaux puis polir les bords ou faces latérales de ceux-ci qui résultent du sciage si la qualité optique des faces sciées n'est pas suffisante.

Au sujet des performances actuelles du sciage on consultera le document (11).

Le procédé de découpe n'est pas critique du point de vue de la précision, chaque zone planaire étant très longue (plusieurs millimètres) par rapport à l'imprécision due à un sciage (quelques micromètres) voire même par rapport à un clivage (quelques dizaines de micromètres).

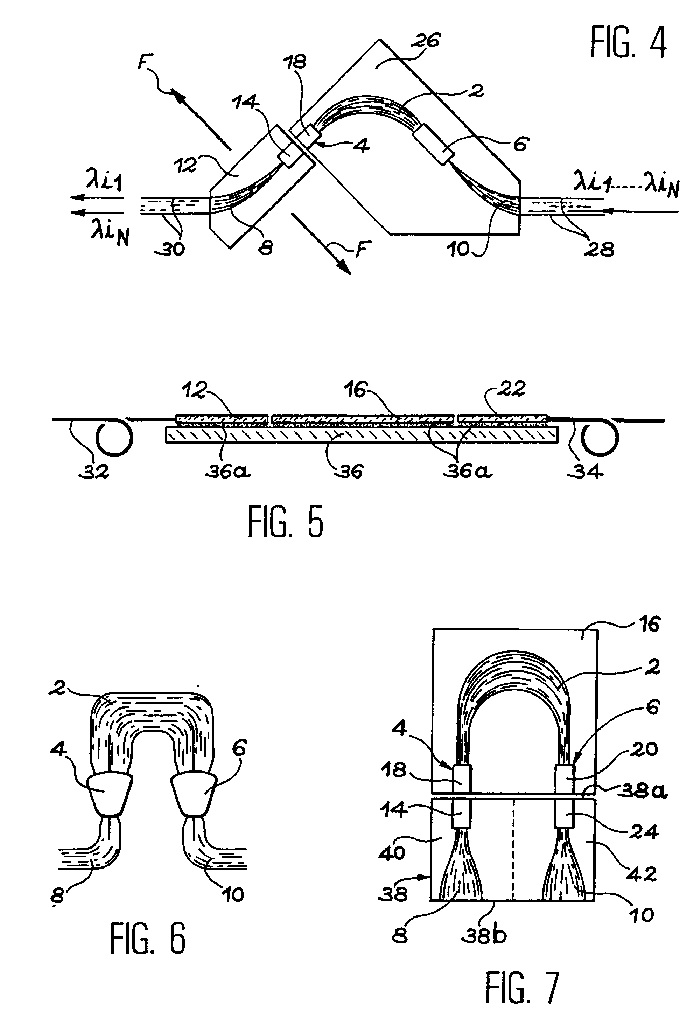

Cela dit, le sciage est tout de même plus approprié que le clivage car il n'induit aucune contrainte sur la forme du PHASAR alors que le clivage nécessite des angles droits quasiment partout ce qui est visible sur la figure 2 et également sur la figure 4.

Cette figure 4 illustre schématiquement un exemple de procédé d'ajustement, de façon opto-mécanique, de la longueur d'onde moyenne ou longueur d'onde centrale du PHASAR dans le cas d'un démultiplexage en longueur d'onde.

On remarquera que le PHASAR conforme à l'invention de la figure 4 ne comprend que deux morceaux 12 et 26 mais on reviendra sur cette question par la suite.

On voit que les microguides 10 servant ici de microguides d'entrée sont respectivement connectés à des fibres optiques 28 et que les microguides 8 servant ici de microguides de sortie sont respectivement connectés à des fibres optiques 30.

En variante, on aurait pu relier les microguides 10 à des émetteurs de lumière et/ou les microguides 8 à des récepteurs de lumière, sans passer par l'intermédiaire de fibres optiques.

Ces émetteurs et/ou ces récepteurs peuvent être hybridés, rapportés ou encore intégrés au PHASAR suivant la nature du matériau utilisé pour la réalisation de ce PHASAR.

Plus généralement, on peut disposer (par hybridation, report ou intégration) à l'entrée et/ou à la sortie, à la place de fibres optiques, tout composant optoélectronique actif (par exemple des émetteurs, des récepteurs ou des amplificateurs de lumière) ou passif (par exemple d'autres composants de branchement en optique intégrée).

Suivant un fonctionnement particulier du PHASAR (démultiplexage), une lumière composée de plusieurs longueurs d'onde $\lambda i1, \lambda i2, ... \lambda iN$ est injectée dans l'une $\underline{i}$ des E fibres optiques d'entrée 28 de manière à récupérer en sortie une seule longueur d'onde dans chacune des N fibres de sortie.

On cherche donc à obtenir une seule longueur d'onde par fibre optique 30 (fibre optique de sortie).

Comme on le voit sur la figure 4, pour l'ajustement en longueur d'onde on déplace le morceau 12 du PHASAR qui comprend la partie de zone planaire 14 et les microguides correspondants 8, ainsi que les fibres optiques de sortie 30 qui lui sont liées, par rapport au reste du PHASAR et notamment par rapport à l'autre partie de zone planaire 18.

Dans l'exemple de la figure 4 (substrat en $SiO_2$) les microguides d'entrée/sortie étant distants de 20 $\mu$m environ (quel que soit l'écartement spectral $\Delta\lambda$), un déplacement du morceau 12 de 1 $\mu$m correspond à un déplacement en $\lambda$ de $\Delta\lambda/20$, donc l'ordre de grandeur de sensibilité est compatible avec la précision des micromanipulateurs.

Dans le cas d'un substrat en InP, par exemple, cette distance de 20 $\mu$m entre microguides se réduit typiquement à une valeur de l'ordre de 5 $\mu$m.

Un positionnement à 0,5 $\mu$m près (accessible par des micromanipulateurs du commerce) donne encore une précision de $\Delta\lambda/10$, ce qui est suffisant dans la plupart des applications.

Pour le déplacement du morceau 12, on utilise un dispositif mécanique qui est symbolisé par les flèches F et permet de déplacer la partie de zone planaire 14 du morceau 12 transversalement par rapport à la partie complémentaire 18.

On effectue ainsi un ajustement transverse qui agit sur la longueur d'onde moyenne $\lambda m$.

Cet ajustement est réalisé jusqu'à ce que l'on obtienne une longueur d'onde par fibre optique de sortie.

Lorsque l'ajustement est terminé, on immobilise le morceau 12 par rapport au reste du PHASAR de la figure 4.

La figure 5 illustre schématiquement le collage des morceaux d'un PHASAR conforme à l'invention sur un support après ajustement de ces morceaux.

Dans le cas de la figure 5, le PHASAR est du genre de celui de la figure 2 et comporte ainsi les trois morceaux 12, 16 et 22 que l'on voit en coupe transversale.

On voit également un ensemble de fibres optiques d'entrée 32 respectivement connectées aux microguides d'entrée 8 et un ensemble des fibres optiques de sortie 34 respectivement connectées aux microguides de sortie 10 du PHASAR.

On commence par exemple par coller le morceau 16 contenant le réseau central de microguides 2 sur un support plan 36 au moyen d'une colle 36a appropriée, par exemple une colle polymérisable par un rayonnement ultraviolet.

On maintient grâce à des moyens mécaniques appropriés non représentés les deux autres morceaux 12 et 22 par rapport à ce morceau 16 et on réalise l'ajustement des trois morceaux de façon opto-mécanique comme on l'a vu plus haut.

Pour ce faire :

- suivant un premier exemple de procédé, on envoie dans la fibre d'entrée i (i entre 1 et E) une lumière contenant uniquement la longueur d'onde étalon $\lambda im$ (i entre 1 et E, m entre entre 1 et N) dont on veut qu'elle sorte sur la fibre optique m en entrant sur la fibre i, et on réalise les déplacements transversaux des morceaux 12 et 22 jusqu'à obtenir le maximum de lumière dans cette fibre m

- suivant un deuxième exemple de procédé, on envoie une lumière polychromatique contenant cette même longueur d'onde étalon et on contrôle la fibre de sortie m à l'aide d'un spectrophotomètre,

- suivant un troisième exemple de procédé, dans le cas de la spectrométie où les fibres optiques de sortie sont remplacées par des détecteurs rapportés, hybridés ou intégrés, on injecte comme pour le premier exemple de procédé la longueur d'onde $\lambda im$ sur l'entrée i et on déplace les éléments jusqu'à ce que le détecteur numéro m recoive le maximum de lumière.

On précise que les morceaux 12 et 22 sont préalablement enduits d'une colle 36a polymérisable par un rayonnement ultraviolet et positionnés en regard des deux côtés du morceau 16 au moyen par exemple de micromanipulateurs de précision.

Lorsque l'ajustement en longueur d'onde est réalisé on fixe les morceaux 12 et 22 par une insolation ultraviolette sur le support plan 36.

On explique maintenant le gain en surface dont il a été question plus haut.

On considère le PHASAR connu, mentionné plus haut, dont les caractéristiques sont les suivantes :

- $\Delta\lambda$ = 1,6 nm
- 16 entrées et 16 sorties
- surface totale : 4,5 cm x 1,7 cm.

Une étude graphique conduit à la possibilité d'intégrer au plus sept PHASARs sur une plaque (substrat) dont le diamètre vaut 100 mm.

Or chaque réseau central de microguides mesure 1,25 cm x 1,25 cm.

On peut en intégrer 45 sur la même surface soit 22 sur une demi-plaque.

Des entrées/sorties « linéarisées » comme l'illustre la figure 3 ont des dimensions AxB avec A=0,5 cm et B=2,2 cm.

On peut en intégrer 70 sur la même surface soit 35 sur une demi-plaque.

Pour obtenir un PHASAR complet il faut un réseau central de microguides et deux entrées-sorties.

En se fondant sur l'addition de 2 demi-plaques, on arrive donc à peu près à 20 PHASARs complets sur une plaque de 100 mm, d'où un gain en surface d'un facteur 3 grâce à la présente invention.

Il est à noter que la mise en oeuvre de l'invention est indépendante du matériau de guidage de lumière que l'on utilise.

Ce matériau est à base de silice, de verre ou d'alliages semiconducteurs de type InP ou GaAs par exemple.

On peut réaliser un PHASAR conforme à l'invention en deux morceaux au lieu de trois morceaux si l'on ne recherche que l'ajustement en longueur d'onde.

Ceci est schématiquement illustré par la figure 4 où l'on voit un PHASAR composé des deux morceaux 12 et 26.

Le morceau 12 est identique au morceau 12 de la figure 2.

L'autre morceau 26 contient le réseau central de microguides 2 muni, d'un côté, de la partie de zone planaire d'entrée 18 complémentaire de la partie 14 qui se trouve sur le morceau 12 et, de l'autre côté, de la zone planaire de sortie 6 complète, munie des microguides de sortie 10.

L'utilisation d'un PHASAR en deux morceaux permet de diminuer le temps du collage final puisque l'on utilise qu'un ajustement opto-mécanique au lieu de deux.

La figure 6 est une vue de dessus schématique d'une structure connue de PHASAR que l'on trouve dans le document (12).

Ce PHASAR a sensiblement la forme d'un U (vu à l'envers sur la figure 6).

On peut réaliser un PHASAR conforme à l'invention ayant une telle structure et composé de deux morceaux (voir figure 7).

Un morceau 16 de ce PHASAR comprend le réseau central de microguides 2 d'un côté duquel on trouve une partie 18 de la zone planaire d'entrée 4 et de l'autre côté une partie 20 de la zone planaire de sortie 6.

Ces deux parties 18 et 20 aboutissent au même côté ou bord du morceau 16.

L'autre morceau 38 du PHASAR comprend les deux autres parties respectives 14 et 24 des zones planaires 4 et 6.

Ces parties 14 et 24 sont respectivement munies de microguides d'entrée 8 et de microguides de sortie 10.

Ces deux autres parties 14 et 24 aboutissent également au même côté ou bord 38a de cet autre morceau 38.

Dans l'exemple de la figure 7, les microguides d'entrée et de sortie ont été « linéarisés » comme on l'a représenté sur la figure 3 déjà décrite.

Ces microguides d'entrée et de sortie aboutissent aussi à un même côté 38b du morceau 38.

Comme on le voit sur la figure 7, les côtés 38a et 38b sont en face l'un de l'autre.

Si on le souhaite, en vue d'un gain en surface, on peut séparer le morceau 38 en deux parties 40 et 42.

La partie 40 comprend alors les éléments référencés 8 et 14 tandis que la partie 42 comprend les éléments référencés 10 et 24.

Le PHASAR de la figure 7, dans lequel l'entrée et la sortie se trouvent d'un même côté de ce PHASAR, peut être avantageux notamment si l'opération de connexion avec les fibres optiques est passive.

Au lieu de figer la longueur d'onde moyenne $\lambda m$ du PHASAR par collage il peut être intéressant dans certaines applications de conserver la possibilité d'un ajustement opto-mécanique de cette longueur d'onde $\lambda m$.

Dans ce cas, il suffit d'utiliser un montage approprié.

Par exemple on peut utiliser un montage mécanique avec des vis de réglage, montage dans lequel le morceau 12 et le morceau 22 (lorsque le PHASAR est en trois morceaux 12, 16 et 22) sont amovibles.

Pour ce faire, on utilise par exemple une cire dont la température de fusion est supérieure à la température-limite d'utilisation du PHASAR.

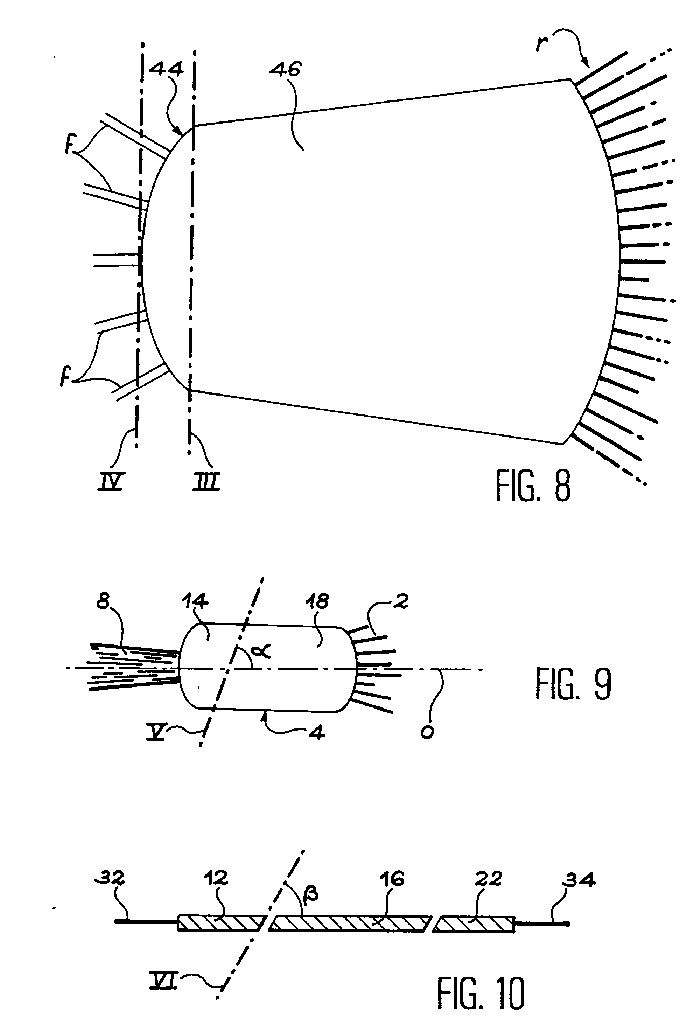

Justifions maintenant l'intérêt d'une séparation de deux morceaux à l'intérieur de la zone planaire correspondante, comme on le fait dans la présente invention, par rapport à la technique décrite dans le document (14) où la séparation est faite « devant » la zone planaire, là où celle-ci débute. D'une manière générale, une séparation à l'intérieur de la zone planaire ne requiert aucune précision de positionnement suivant la direction de l'axe optique de cette zone. Ce n'est pas le cas du document (14) où, au contraire, la séparation doit être faite exactement sur le dioptre d'entrée de cette zone. Plus particulièrement en ce qui concerne un PHASAR de type N vers N (N>1) on voit sur la figure 8 (f : guides d'accès à la zone planaire et r : réseau de microguides) que le dioptre d'entrée 44 de la zone planaire 46 est un arc de cercle (de grand rayon) et non pas une droite (chose qui apparaissait déjà sur la figure 6). Ceci veut dire qu'une séparation linéaire en cet endroit va nécessairement se trouver légèrement à l'intérieur de la zone planaire (ligne III) et non pas au niveau de la ligne IV. En conséquence le document (14) n'est pas parfaitement rigoureux ou, en tout cas, pas applicable à un grand nombre N de canaux à l'entrée, alors que la présente invention est applicable quel que soit N.

Sur les figures 2, 4 et 7 chaque plan de séparation de morceaux fait un angle de 90° avec la zone planaire où à lieu cette séparation et avec l'axe optique de cette zone planaire.

Cependant cela n'est pas obligatoire : l'angle en question peut être différent de 90° en vue d'éviter des phénomènes de réflexion parasite de lumière. Plus précisément, dans l'invention, deux parties d'une zone planaire, qui sont jointes l'une à l'autre, peuvent l'être suivant un plan :

- qui fait avec le plan de cette zone, un angle différent de 90°, apte à éviter une réflexion parasite de lumière,
- ou qui est perpendiculaire au plan de cette zone et qui fait avec l'axe optique de celle-ci, un angle différent de 90°, apte à éviter une réflexion parasite de lumière.

Pour ce faire les morceaux peuvent être formés sur un ou des substrats puis rapportés de façon à ce que le plan de séparation :

- fasse, avec le plan de la zone planaire correspondante, un angle différent de 90°, apte à éviter une réflexion parasite de lumière,
- ou soit perpendiculaire à la zone planaire correspondante et fasse, avec l'axe optique de cette zone planaire, correspondante, un angle différent de 90°, apte à éviter une réflexion parasite de lumière.

Tout ceci est schématiquement illustré par les figures 9 et 10. Pour l'exemple de la figure 9, on a repris l'exemple de la zone planaire 4 de la figure 2 séparée ici en deux parties 14 et 16 suivant un plan perpendiculaire à cette zone mais faisant un angle α≠90° avec l'axe optique O de cette zone. La figure 9 est une vue de dessus et le plan de séparation est représenté par une ligne V.

Pour l'exemple de la figure 10, on a repris le mode de réalisation de la figure 5 avec les mêmes références numériques. Dans le cas de cette figure 10, le plan de séparation fait un angle β≠90° avec le plan des morceaux 12, 16 et 22 (correspondant au plan du substrat où ces morceaux ont été formés). Ce plan de séparation est représenté par une ligne VI sur la figure 10 qui est une vue en coupe transversale. On évite ainsi des phénomènes de réflexion parasite à condition que ces angles α et β soient tels qu'aucune réflexion lumineuse sur la séparation entre morceaux ne revienne dans les moyens d'introduction de lumière (références 8 sur la figure 9 et 32 sur la figure 10).

A titre d'exemple un angle β de l'ordre de 82° (90°-8° : voir le document (13)) peut convenir et l'angle α peut être choisi en fonction de la proximité de ces moyens d'introduction de lumière.

Les documents cités dans la présente description sont les suivants :

(1) C. Dragonne, « An NxN optical multiplexer using a planar arrangement of two star couplers », IEEE Photonics Technology Letters, 3,9, pp.812-815 (1991)

(2) C. Dragonne, « Improved optical switch multiplexer and demultiplexer », demande de brevet européen EP 0 528 652 A publiée le 24 février 1993

(3) C. Grand et al., « 16-Channel Optical Wavelength Multiplexer/Demultiplexer Integrated on Silicon Substrate » Proceedings of EFOC'LAN, London, pp. 264-267, 1991

EP 0 911 660 A1

(4) H. Takahashi et al., « 10 GHz spacing optical frequency division multiplexer based on arrayed-waveguide grating », Electronics Letters, 28, 4, pp. 380-382, 1992

(5) H. Yamada et al., « Statically-phase-compensated 10 GHz-spaced arrayed-waveguide grating », El. Letters, vol.32, 7, pp. 1580-1582, 1996

(6) H. Uetsaka et al. « Novel lxN guidedwave multi/demultiplexer for FDM, OFC 95 Technical digest, pp.76-77, 1995

(7) H. Uetsaka et al., « Recent improvements in arrayed waveguide operating dense wavelength division multiplexer/demultiplexers », Proc. ECIO 97, pp. 76-79

(8) C.R. Doerr et al., « A monolithic multiplexed 16-wavelength WDM transmitter with accurate channel spacing, OFC 96

(9) Y. Inoue et al., El. Letters, vol.31, 9, pp. 726-727, 1995

(10) P.C. Clemens et al., « Optical phased-array in $SiO_2$/Si with adaptable center wavelength », Proc. ECIO 95, Delft, pp. 505-508

(11) H. Yokosuka et al., « Multifiber optical components for subscriber networks », Proc. ECTC 96, pp. 487-493

(12) M.K. Smit et al., « PHASAR-based WDM-devices : principles, design and applications », IEEE Journal of Selected Topics in Quantum Electronics, vol.2, 2, juin 1996 (special issue on IO), pp.236-250

(13) M. Ishii et al., IEEE Photonics Technology Letters, vol.8, n°3, mars 1996, pp.387 à 389

(14) WO 9600915A (SIEMENS AG) - voir aussi US 5,732,171.

## Revendications

1.  Dispositif à réseau de phase comprenant les composants suivants :

    - une zone planaire d'entrée (4),
    - une zone planaire de sortie (6),
    - un réseau de microguides (2) disposé entre ces zones,
    - des moyens (8) d'introduction d'onde lumineuse associés à la zone planaire d'entrée (4), et
    - des moyens (10) de sortie d'onde lumineuse associés à la zone planaire de sortie (6),

    ce dispositif étant caractérisé en ce qu'il comprend au moins deux morceaux appelés premier et deuxième morceaux, le premier morceau (12, 38) comprenant une partie (14, 24) d'au moins l'une des zones planaires ainsi que les moyens associés correspondants, le deuxième morceau (16, 26) comprenant l'autre partie (18) de cette zone planaire et le reste des composants du dispositif, et en ce que les premier et deuxième morceaux sont rapportés de façon à former l'ensemble du dispositif et à ajuster ce dispositif en longueur d'onde.

2.  Dispositif selon la revendication 1, dans lequel le premier morceau (12) comprend une partie (14) d'une seule des deux zones planaires et le deuxième morceau (26) comprend l'autre partie (18) de cette zone planaire et la totalité de l'autre zone planaire (6).

3.  Dispositif selon la revendication 1, dans lequel le premier morceau (38) comprend une partie (14, 24) de chacune des première et deuxième zones planaires et le deuxième morceau (16) comprend les autres parties (18, 20) respectives des première et deuxième zones planaires.

4.  Dispositif selon la revendication 3, dans lequel ces autres parties respectives sont situées d'un même côté du deuxième morceau.

5.  Dispositif selon la revendication 1, comprenant trois morceaux appelés premier, deuxième et troisième morceaux, le premier morceau (12) comprenant une partie (14) de l'une des zones planaires (4) ainsi que les moyens associés

11

correspondants (8), le deuxième morceau (22) comprenant une partie (24) de l'autre zone planaire (6) ainsi que les moyens associés correspondants (10) et le troisième morceau (16) comprenant les autres parties respectives (18, 20) des zones planaires ainsi que le réseau de microguides (2), et en ce que les premier, deuxième et troisième morceaux sont rapportés de façon à former l'ensemble du dispositif et ajuster ce dispositif en longueur d'onde.

6. Dispositif selon la revendication 5, dans lequel les autres parties respectives (18, 20) des zones planaires sont situées d'un même côté du troisième morceau (16).

7. Dispositif selon l'une quelconque des revendications 1 à 6, dans lequel les moyens d'introduction d'onde lumineuse (8) et les moyens de sortie d'onde lumineuse (10) s'étendent de façon sensiblement rectiligne à partir de leurs zones planaires respectives.

8. Dispositif selon l'une quelconque des revendications 1 à 7, comprenant en outre un support (36) sur lequel les morceaux (12, 16, 22) sont rapportés.

9. Dispositif selon la revendication 8, dans lequel les morceaux (12, 16, 22) sont rapportés de façon inamovible sur le support (36).

10. Dispositif selon la revendication 8, dans lequel au moins un morceau comprenant une partie de zone planaire ainsi que les moyens associés correspondants est rapporté de façon amovible sur le support.

11. Dispositif selon l'une quelconque des revendications 1 à 10, dans lequel les deux parties de la zone planaire, qui sont jointes l'une à l'autre, le sont suivant un plan qui fait, avec le plan de cette zone, un angle différent de 90°.

12. Dispositif selon l'une quelconque des revendications 1 à 10, dans lequel les deux parties de la zone planaire, qui sont jointes l'une à l'autre, le sont suivant un plan qui est perpendiculaire au plan de cette zone et qui fait, avec l'axe optique de celle-ci, un angle différent de 90°.

13. Procédé de fabrication du dispositif selon la revendication 1, ce procédé étant caractérisé en ce qu'on forme les morceaux, (12, 16, 22, 26, 38) on rapporte ces morceaux de façon à former l'ensemble du dispositif et on ajuste ce dispositif en longueur d'onde.

14. Procédé selon la revendication 13, dans lequel on effectue un déplacement relatif d'un morceau par rapport à l'autre pour ajuster la longueur d'onde centrale du dispositif.

15. Procédé selon l'une quelconque des revendications 13 et 14, dans lequel on relie optiquement les moyens d'introduction d'onde lumineuse et les moyens de sortie d'onde lumineuse à des fibres optiques (28, 30, 32, 34), ou à des émetteurs-récepteurs de lumière, ou à des fibres optiques et à des émetteurs-récepteurs de lumière avant d'ajuster le dispositif en longueur d'onde.

16. Procédé selon l'une quelconque des revendications 13 à 15, dans lequel chaque morceau est formé sur un substrat puis séparé de ce substrat par sciage.

17. Procédé selon la revendication 16, dans lequel au moins un bord de ce morceau est ensuite poli.

18. Procédé selon l'une quelconque des revendications 13 à 15, dans lequel chaque morceau est formé sur un substrat susceptible d'être clivé puis est séparé de ce substrat par clivage.

19. Procédé selon l'une quelconque des revendications 13 à 18, dans lequel les morceaux sont formés sur un ou des substrats puis rapportés de façon à ce que le plan de séparation fasse, avec le plan de la zone planaire correspondante, un angle différent de 90°.

20. Procédé selon l'une quelconque des revendications 13 à 18, dans lequel les morceaux sont formés sur un ou des substrats puis rapportés de façon à ce que le plan de séparation soit perpendiculaire à la zone planaire correspondante et fasse avec l'axe optique de cette zone planaire, un angle différent de 90°.

FIG. 1

FIG. 2

FIG. 3

FIG. 4

FIG. 5

FIG. 6

FIG. 7

FIG. 8

FIG. 9

FIG. 10

**Office européen des brevets**

**RAPPORT DE RECHERCHE EUROPEENNE**

Numéro de la demande

EP 98 40 2642

## DOCUMENTS CONSIDERES COMME PERTINENTS

| Catégorie | Citation du document avec indication. en cas de besoin. des parties pertinentes | Revendication concernée | CLASSEMENT DE LA DEMANDE (Int.Cl.6) |
|---|---|---|---|
| A | WO 96 00915 A (SIEMENS AG ;MICHEL HERBERT (DE); MAERZ REINHARD (DE); REICHELT ACH) 11 janvier 1996 * page 3, ligne 16 - page 4, ligne 17; figure 1 * | 1 | G02B6/34 |
| A | WO 97 11396 A (PHILIPS ELECTRONICS NV ;PHILIPS NORDEN AB (SE)) 27 mars 1997 * page 5, ligne 11 - ligne 18; figure 1 * * page 8, ligne 19 - ligne 26; figure 6 * | 1,8 | |
| A | PATENT ABSTRACTS OF JAPAN vol. 097, no. 001, 31 janvier 1997 & JP 08 234029 A (HITACHI CABLE LTD;NIPPON TELEGR &AMP; TELEPH CORP &LT;NTT&GT;), 13 septembre 1996 * abrégé * | 1 | |
| A | PATENT ABSTRACTS OF JAPAN vol. 098, no. 002, 30 janvier 1998 & JP 09 269514 A (NEC CORP), 14 octobre 1997 * abrégé * | 1 | DOMAINES TECHNIQUES RECHERCHES (Int.Cl.6) G02B |

Le présent rapport a été établi pour toutes les revendications

| Lieu de la recherche | Date d'achèvement de la recherche | Examinateur |
|---|---|---|
| BERLIN | 9 février 1999 | Ciarrocca, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur. mais publié à la date de dépôt ou après cette date
D : cité dans la demande
L : cité pour d'autres raisons

& : membre de la même famille, document correspondant

EPO FORM 1503 03 82 (P04C02)

**ANNEXE AU RAPPORT DE RECHERCHE EUROPEENNE
RELATIF A LA DEMANDE DE BREVET EUROPEEN NO.**

EP 98 40 2642

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

09-02-1999

| Document brevet cité au rapport de recherche | Date de publication | Membre(s) de la famille de brevet(s) | Date de publication |
|---|---|---|---|
| WO 9600915 A | 11-01-1996 | DE 59503996 D<br>EP 0767921 A<br>JP 10502183 T<br>US 5732171 A | 26-11-1998<br>16-04-1997<br>24-02-1998<br>24-03-1998 |
| WO 9711396 A | 27-03-1997 | EP 0792469 A<br>JP 10509536 T<br>US 5838844 A | 03-09-1997<br>14-09-1998<br>17-11-1998 |

EPO FORM P0460

Pour tout renseignement concernant cette annexe : voir Journal Officiel de l'Office européen des brevets, No.12/82